# EUROPÄISCHE PATENTSCHRIFT

(11) **EP 1 340 584 B1**
(45) Veröffentlichungstag und Bekanntmachung des Hinweises auf die Patenterteilung: **05.07.2006**
(21) Anmeldenummer: 02003419.5
(22) Anmeldetag: 16.02.2002
(51) Int. Cl.: B23K 26/08, B23K 37/04

(54) **Maschine zum thermischen Schneiden von Werkstücken insbesondere mittels Laser**
Apparatus for thermal cutting of workpieces in particular using laser
Machine de coupage thermique de pièces en particulier avec laser

(43) Veröffentlichungstag der Anmeldung: 03.09.2003
(73) Patentinhaber: TRUMPF Werkzeugmaschinen GmbH + Co. KG, 71254 Ditzingen (DE)
(72) Erfinder: Erlenmaier, Werner, 70839 Gerlingen (DE)
(74) Vertreter: Kohler Schmid Möbus

(56) Entgegenhaltungen:
- DE-A- 19 943 043
- PATENT ABSTRACTS OF JAPAN vol. 017, no. 690 (M-1530), 16. Dezember 1993 (1993-12-16) & JP 05 237685 A (HITACHI LTD), 17. September 1993 (1993-09-17)
- PATENT ABSTRACTS OF JAPAN vol. 013, no. 335 (M-856), 27. Juli 1989 (1989-07-27) & JP 01 113195 A (MATSUSHITA ELECTRIC IND CO LTD), 1. Mai 1989 (1989-05-01)
- PATENT ABSTRACTS OF JAPAN vol. 018, no. 037 (M-1545), 20. Januar 1994 (1994-01-20) & JP 05 269594 A (NISSAN MOTOR CO LTD), 19. Oktober 1993 (1993-10-19)
- PATENT ABSTRACTS OF JAPAN vol. 012, no. 182 (M-702), 27. Mai 1988 (1988-05-27) & JP 62 292293 A (MITSUBISHI ELECTRIC CORP), 18. Dezember 1987 (1987-12-18)
- PATENT ABSTRACTS OF JAPAN vol. 012, no. 157 (M-696), 13. Mai 1988 (1988-05-13) & JP 62 275593 A (YAMAZAKI MAZAK CORP), 30. November 1987 (1987-11-30)

## Beschreibung

Die Erfindung betrifft eine Maschine zum thermischen Schneiden von Werkstü ckon, insbesondere eine Laserbearbeitungsmaschine, mit einer Schneideinrichtung zur Trennung eines Werkstücks in ein Gutteil und in ein Restteil und mit einer Werkstückauflage, welche verfahrbare, im Bereich des Trennschnitts voneinander beanstandet angeordnet erste und zweite Auflageelemente zur Unterstützung des Werkstücks aufweist,

Eine derartige Laserbearbeitungsmaschine ist beispielsweise durch die JP(A) 05237685 bekannt geworden. Eine vergleichbare technische Lehre ist auch in der JP(A) O113195 beschrieben.

Laserbearbeitungsmaschinen mit zwei Auflageebenen zum Transport des Werkstücks sind in der JP 61-292988 und in der JP 62-275593 beschrieben.

Beim thermischen Schneiden von Werkstücken werden die zu bearbeitenden Werkstücke bisher auf Gitter oder Roste der Werkstückauflage gelegt, so dass sich ein Gitter von Auflagepunkten ergibt. Dies führt zu folgenden Problemen: Der Schnittspalt im Werkstück zur Trennung des Werkstücks in ein Gutteil und in ein Restteil kann im Bereich der Auflagepunkte entstehen. Dies kann zu einem Festbacken der beiden Werkstü ckteile führen, weil neben den beiden Werkstü ckteilen auch die Auflageelemente erwärmt werden und ein Verschweißen eintritt. Darüber hinaus kann der Schwerpunkt der beiden Werkstückteile bezü glich der Auflagepunkte derart ungünstig liegen, dass es zu einem Verkippen der Werkstü ckteile auf der Werkstückauflage kommt. Diese Probleme lassen eine automatisierte, prozesssichere Entnahme der Werkstü ckteile von der Werkstückauflage nicht zu.

Der Erfindung liegt die Aufgabe zugrunde, eine Laserbearbeitungsmaschine mit einer Werkstückauflage zu entwickeln, von der bearbeitete Werkstü ckteile problemlos entnommen werden können.

Diese Aufgabe wird bei einer Laserbearbeitungsmaschine gemäß Patentanspruch 1 dadurch gelöst, dass die ersten und zweiten Auflageelemente höhenverstellbar ausgebildet sind und dadurch eine erste und eine zweite Auflageebene ausbilden, die jeweils dem Gutteil bzw. dem Restteil zugeordnet sind.

Erfindungsgemäß werden dem Gutteil und dem Restteil Auflageelemente zugeordnet, die senkrecht zur Auflageebene aufweisen, wobei der Abstand auf den Trennschnitt abgestimmt ist. Durch diese Abstimmung kann ein Festbacken an den Auflageelementen vermieden werden, weil die Auflageelemente weit genug von dem Trennschnitt entfernt angeordnet und nur unwesentlich erwärmt werden.

Da die Auflageelemente verfahrbar angeordnet sind, kann der Abstand gezielt auf den Trennschnitt eingestellt werden, um die vorgenannten Probleme zu vermeiden. Weiterhin können die Auflageelemente so positioniert werden, dass eine gleichmäßige Unterstützung der Werkstü ckteile bezogen auf den Schwerpunkt der Werkstü ckteile erzielt wird.

Die ersten und die zweiten Auflageelementebilden eine erste und eine zweite Auflageebene aus, die jeweils dem Gutteil bzw. dem Restteil zugeordnet sind. Dies erleichtert die Entnahme der unterschiedlichen Werkstückteile von den unterschiedlichen Auflageebenen. Bei einer automatisierten Entnahme der Werkstückteile von einer vorgegebenen Auflageebene wird automatisch nur das Gutteil oder nur das Restteil entnommen.

In Weiterbildung der Erfindung kann eine Matrixanordnung von vertikal angeordneten Auflageelementen vorgesehen sein, von denen abgestimmt auf die Größen des Gutteils und des Restteils erste und zweite Auflageelemente mit einstellbarer in vertikaler Richtung unterschiedlicher Längserstreckung auswählbar sind. Eine Aktivierung einzelner Auflageelemente dient der gezielten stets gleichmäßigen Unterstützung des Gutteils und des Restteils in zwei Auflageebenen.

Bevorzugt ist es, dass in die Auflagespitze eines Auflageelements eine Rolle eingelegt ist. Die Rollen können beispielsweise in die Auflagespitzen der einen Auflageelemente zur Auflage der Gutteile eingelegt sein, um die Gutteile gegenüber den Restteilen zu unterlegen. Die gezielte, ggf. durch eine programmierbare Steuereinheit durchführbare Anordnung derartiger Rollen oder variabel einsetzbarer Auflagen ermöglicht einerseits eine Ausbildung einer zweiten Ebene dort, wo Gutteile zur Auflage kommen sollen. Andererseits führt diese Anordnung zu einer beweglichen freien Auflage der Werkstückteile und erleichtert die Entnahme.

In X-, Y- und Z-Richtung positionierbare Auflageelemente können durch pneumatisch oder hydraulisch verfahrbare Zylinder ausgebildet sein.

Zur Durchführung einer automatisierten Entnahme ist es vorteilhaft, dass eine programmierbare Steuereinheit zur Positionierung der Auflageelemente vorgesehen ist. Die Steuereinheit kann auch die Abstimmung der Auflageelemente hinsichtlich eines Entladegeräts übernehmen, um das Zusammenwirken zwischen dem Auflegen des Werkstücks, dem Trennen des Werkstücks und dem Entnehmen des Werkstücks zu kontrollieren und zu steuern.

Ein bevorzugtes Ausführungsbeispiel der Erfindung ist in der Zeichnung schematisch dargestellt und wird nachfolgend mit Bezug zu den Figuren der Zeichnung näher erläutert. Es zeigt:
- **Fig. 1**: einen Längsschnitt einer Werkstückauflage einer Laserschneidmaschine;
- **Fig. 2**: eine Draufsicht der Werkstückauflage nach Fig. 1.

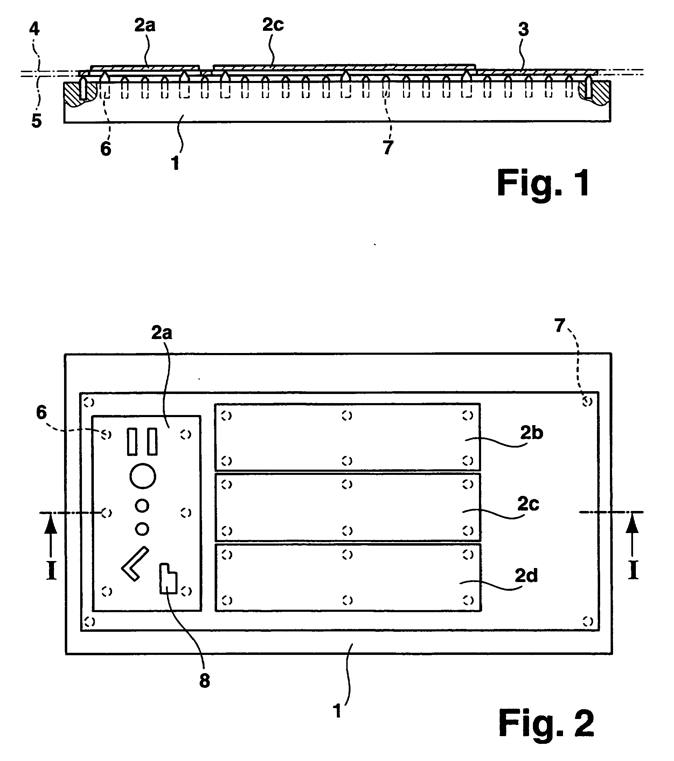

Ein Werkstück, im vorliegenden Fall ein Blech, wurde nach der Auflage auf eine Werkstückauflage 1 durch eine an sich bekannte und daher in der Fig. 1 nicht dargestellte Laserschneideinrichtung einer Laserbearbeitungsmaschine bearbeitet. Aus der Fig. 1 ist ersichtlich, dass bereits mehrere Trennschnitte an dem Werkstück mittels der Laserschneideinrichtung vorgenommen wurden, so dass mehrere Gutteile 2a bis 2d (siehe hierzu auch Fig. 2) und ein Restteil 3 entstanden sind, wobei unter dem Restteil 3 nicht zwangsläufig ein Schneidabfall verstanden werden muss.

Die Werkstückauflage 1 arbeitet mit einer ersten Auflageebene 4 und einer zweiten Auflageebene 5, so dass sich die Gutteile 2a bis 2d nach dem Schneidvorgang in einer gegenüber dem Restteil 3 erhöhten Position befinden. Das abgetrennte Restteil 3 befindet sich in der tieferen Auflageebene 5.

Die separierten Teile 2a bis 2d und 3 können der Laserbearbeitungsmaschine problemlos entnommen werden, weil eine räumliche Trennung der Teile 2a bis 2d von dem Teil 3 gegeben ist und/oder ein Festbacken der Teile 2a bis 2d vermieden wurde. Die nach dem Schneidprozess vorliegende Anordnung der Gutteile 2a bis 2d und des Restteils 3 in zwei verschiedenen Auflageebenen 4 und 5 ermöglicht eine automatisierte, prozesssichere Entnahme der Gutteile 2a bis 2d und des Restteils 3 von der Werkstückauflage 1. Es versteht sich von selbst, dass die Zuordnung der Auflageebenen 4 und 5 zu den Gutteilen 2a bis 2d und dem Restteil 3 auch umgekehrt ausgeführt sein kann. Die Entnahme der Gutteile 2a bis 2d und des Restteils 3 lässt sich manuell oder mit Hilfe von Saugern (Saugerrahmen) durchführen.

Der Schneidvorgang, der zu der dargestellten Situation führt, betrifft im wesentlichen folgende nacheinander durchzuführende Verfahrensschritte: Zunächst wird das zuschneidende Werkstück der Werkstückauflage 1 zugeführt. Dies geschieht mit Hilfe einer ebenfalls bekannten Transporteinrichtung oder manuell. Das zu schneidende Werkstück liegt anschließend nur auf ersten Auflageelementen 6 auf. Die ersten Auflageelemente 6 können gezielt in drei Dimensionen (Hoch / Tief; X-, Y-Richtung) so positioniert werden, dass lediglich die später entstehenden Gutteile 2a bis 2d von den ersten Auflageelementen 6 unterstützt oder unterbaut werden. Für eine ausreichende gleichmäßige Unterstützung entstehender Gutteile 2a bis 2d ist eine ausreichende Anzahl von ersten Auflageelementen 6 vorzusehen (ggf. in Gitter- oder Matrixanordnung, wie in **Fig. 2** gezeigt). Die auswählbaren und variabel einsetzbaren ersten Auflageelemente 6 der Matrixanordnung lassen sich mit Hilfe einer programmierbaren Steuereinheit bezüglich der entstehenden Gutteile 2a bis 2d zur gleichmäßigen Unterstützung definiert positionieren. Die ersten Auflageelemente 6 werden gezielt dort eingesetzt, wo spätere Gutteile 2a bis 2d entstehen.

Zur späteren Auflage des nach dem Trennschnitt entstehenden Restteils 3 sind zweite Auflageelemente 7 vorgesehen, von denen in der Fig. 2 nur einzelne angedeutet sind. Das abzutrennende Restteil 3 wird während des Trennschnitts nicht unterstützt oder unterbaut und kann sich daher als abgetrenntes Restteil 3 auf die zweiten Auflageelemente 7 (Auflageebene 5) absenken. Ggf. können auch die zweiten Auflageelemente 7 höhenverstellbar und in X-, Y-Richtung positionierbar ausgebildet sein.

Durch den Trennschnitt des Schneidprozesses wird das sich in einer Auflageebene befindende Werkstück in sich in zwei Auflageebenen befindende Teile 2a bis 2d und 3 aufgeteilt. Die Positionen der ersten Auflageelemente 6 und der zweiten Auflageelemente 7 werden weiterhin so gewählt, dass diese einen Abstand von dem durchzuführenden Trennschnitt aufweisen, damit ein freier Schnittspalt zwischen den Gutteilen 2a bis 2d und dem Restteil 3 entstehen kann Das thermische Schneiden des Werkstücks kann nicht zu einem Festbacken oder Verschweißen der Gutteile 2a bis 2d oder des Restteils 3 an den Auflagepunkten der Auflageelemente 6 und 7 führen, weil eine Bearbeitung des Werkstücks stets über einem Freiraum zwischen den Auflagepunkten stattfindet. Die Auflageelemente 6 und 7 sind auf unterschiedliche vorgegebene Bereiche des Werkstücks einstellbar.

Bei den zugeschnittenen Gutteilen 2a bis 2d sowie bei dem Restteil 3 handelt es sich um lose auf den Auflageelementen 6 und 7 aufliegendes freies Schneidgut. Die abgetrennten Gutteile 2a bis 2d liegen auf den freien Enden von ersten Auflageelementen 6 auf, während sich das abgetrennte Restteil 3 auf den freien Enden der zweiten Auflageelemente 7 befindet. Die Auflageelemente 6 und 7 sind beispielsweise durch Bolzen oder Stege ausgebildet. Alternativ kommen auch pneumatisch verfahrbare Zylinder in Betracht. In die Auflagespitzen können zusätzlich Rollen eingelegt sein, auf denen die Gutteile 2a bis 2d und das Restteil 3 beweglich aufliegen.

Weiterhin ergibt sich aus der Fig. 2, dass aus dem Gutteil 2a auch kleinere Bereiche 8 herausgeschnitten sind, die ebenfalls nach dem Trennschnitt automatisch in die tiefere Auflageebene 5 abgesenkt sind. Zu Entnahme des Restteils 3 kann dieses ggf. vor der Entnahme zerschnitten werden.

### BEZUGSZEICHENLISTE

- 1: Werkstückauflage
- 2a: Gutteil
- 2b: Gutteil
- 2c: Gutteil
- 2d: Gutteil
- 3: Restteil
- 4: Erste Auflageebene
- 5: Zweite Auflageebene
- 6: Erste Auflageelemente
- 7: Zweite Auflageelemente
- 8: Werkstückbereich

## Patentansprüche

1. Maschine zum thermischen Schneiden von Werkstücken, insbesondere eine Laserbearbeitungsmaschine, mit einer Schneideinrichtung zur Trennung eines Werkstücks in ein Gutteil (2a bis 2d) und in ein Restteil (3) und mit einer Werkstückauflage (1), welche verfahrbare, im Bereich des Trennschnitts voneinander beanstandet angeordnet erste und zweite Auflageelemente (6, 7) zur Unterstützung des Werkstücks aufweist, **dadurch gekennzeichnet, dass** die ersten und zweiten Auflageelemente (6, 7) höhenverstellbar ausgebildet sind und **dadurch** eine erste (4) und eine zweite (5) Auflageebene auf unterschiedlichem Höhenniveau ausbilden, die jeweils dem Gutteil (2a bis 2d) bzw. dem Restteil (3) zugeordnet sind.

2. Maschine nach Anspruch 1, **dadurch gekennzeichnet, dass** eine Matrixanordnung von vertikal angeordneten Auflageelementen (6, 7) vorgesehen ist, von denen abgestimmt auf die Größen des Gutteils (2a bis 2d) und Restteils (3) erste und zweite Auflageelemente (6, 7) mit einstellbarer in vertikaler Richtung unterschiedlicher Längserstreckung auswählbar sind.

3. Maschine nach einem der vorhergehenden Ansprüche, **dadurch gekennzeichnet, dass** in die Auflagespitze eines Auflageelements (6, 7) eine Rolle eingelegt ist.

4. Maschine nach einem der vorhergehenden Ansprüche, **dadurch gekennzeichnet, dass** die Auflageelemente (6, 7) durch pneumatisch oder hydraulisch verfahrbare Zylinder ausgebildet sind.

5. Maschine nach einem der vorhergehenden Ansprüche, **dadurch gekennzeichnet, dass** eine programmierbare Steuereinheit zur Positionierung der Auflageelemente (6, 7) vorgesehen ist.

## Claims

1. Machine for thermally cutting workpieces, in particular a laser processing machine, having a cutting device for separating a workpiece into a product portion (2a to 2d) and a remainder portion (3), and having a workpiece support (1) which has displaceable first and second support elements (6, 7); which are arranged spaced apart from each other in the region of the separating cut, for supporting the workpiece, **characterised in that** the first and second support elements (6, 7) are constructed so as to be vertically adjustable and thereby form, at different vertical levels, a first support plane (4) and a second support plane (5) which are associated with the product portion (2a to 2d) and the remainder portion (3), respectively.

2. Machine according to claim 1, **characterised in that** a matrix arrangement of vertically arranged support elements (6, 7) is provided, of which first and second support elements (6, 7) having an adjustable longitudinal extent which differs in a vertical direction can be selected in accordance with the sizes of the product portion (2a to 2d) and remainder portion (3).

3. Machine according to either of the preceding claims, **characterised in that** a roller is inserted in the support tip of a support element (6, 7).

4. Machine according to any one of the preceding claims, **characterised in that** the support elements (6, 7) are formed by pneumatically or hydraulically displaceable cylinders.

5. Machine according to any one of the preceding claims, **characterised in that** a programmable control unit is provided for positioning the support elements (6, 7).

## Revendications

1. Machine de coupage thermique de pièces, en particulier une machine d'usinage par laser, avec un dispositif de coupe pour séparer une pièce en une partie utile (2a à 2d) et une partie restante (3) et avec un support de pièce (1) qui présente des premiers et deuxièmes éléments de support (6, 7) déplaçables, disposés à distance les uns des autres au niveau de la coupe de séparation, servant à soutenir la pièce, **caractérisée par le fait que** les premiers et deuxièmes éléments de support (6, 7) sont réglables en hauteur et forment de ce fait un premier (4) et un deuxième (5) plan de support à niveau de hauteur différent qui sont associés respectivement à la partie utile (2a à 2d) et à la partie restante (3).

2. Machine selon la revendication 1, **caractérisée par le fait qu'**il est prévu une disposition matricielle d'éléments de support (6, 7) disposés verticalement parmi lesquels, en fonction des tailles de la partie utile (2a à 2d) et de la partie restante (3), on peut sélectionner des premiers et deuxièmes éléments de support (6, 7) de différente extension en longueur réglable en direction verticale.

3. Machine selon l'une des revendications précédentes, **caractérisée par le fait qu'**un galet est incorporé dans la pointe de support d'un élément de support (6, 7).

4. Machine selon l'une des revendications précédentes, **caractérisée par le fait que** les éléments de support (6, 7) sont formés par des vérins déplaçables pneumatiquement ou hydrauliquement.

5. Machine selon l'une des revendications précédentes, **caractérisée par le fait qu'**il est prévu une unité de commande programmable pour positionner les éléments de support (6, 7).
